# EUROPEAN PATENT SPECIFICATION

(11) **EP 3 670 166 B1**
(45) Date of publication and mention of the grant of the patent: **07.12.2022**
(21) Application number: 19218342.4
(22) Date of filing: 19.12.2019
(51) Int. Cl.: B29D 30/06, B29D 30/16, B60C 15/00, B60C 15/05

(54) **TIRE CLAMPING DEVICE, TIRE MOLD AND METHOD OF MOLDING A TIRE**
REIFENSPANNVORRICHTUNG, REIFENFORM UND VERFAHREN ZUM FORMEN EINES REIFENS
DISPOSITIF DE SERRAGE DE PNEU, MOULE DE PNEU ET PROCÉDÉ DE MOULAGE D'UN PNEU

(30) Priority: 20.12.2018 US 201862782474 P; 04.06.2019 US 201916430794
(43) Date of publication of application: 24.06.2020
(73) Proprietor: The Goodyear Tire & Rubber Company, Akron, OH 44316 (US)
(72) Inventor: STOILA, George Michael, Tallmadge, OH 44278 (US); ANDERSON, John Edward, Atwater, OH 44201 (US); HOGAN, Michael James, Tallmadge, OH 44278 (US)
(74) Representative: Kutsch, Bernd

(56) References cited:
- EP-A1- 2 743 069
- FR-A- 1 381 900
- US-A- 2 834 049
- US-A- 2 904 832
- US-A- 3 260 782
- US-A- 3 868 203
- US-A1- 2004 011 450

## Description

### Field of the Invention

The invention relates generally to tires and more particularly to a pneumatic tire and their method of manufacturing.

### Background of the Invention

For high performance and ultrahigh performance tires, it is often desired to eliminate the ply turnup around the bead. Eliminating the ply turnup removes the stress concentration especially when the tire construction is embodied with larger diameter fabric cords. However, it is difficult to build the tire without building the tire on a solid core. The solid core eliminates the movement of the carcass and builds a green tire with much less transformation in shape from the uncured to the cured tire. However, building a tire on a solid core requires special equipment and often is a much slower tire building process. Thus, it is desired to provide an apparatus that facilitates the building of a tire that has no ply turnup, and also facilitates use of heavy cord for the ply and does not require a solid core.

US 2,904,832 shows a clamping device in accordance with the preamble of claim 1.

US 3,868,203 discloses a tire molding machine having a core mechanism adapted to be expanded radially and converted to a toroidal shape.

An apparatus for supporting and holding an annular bead core-apex subassembly is disclosed in EP 2 743 069 A1.

### Summary of the Invention

The invention relates to a clamping device in accordance with claim 1, to a mold in accordance with claim 6 and to a method in accordance with claim 9.

Dependent claims refer to preferred embodiments of the invention.

The invention provides according to claim 1 of the invention a tire clamping device comprising an inner portion, and a plurality of segments connected to the inner portion, wherein the tire clamping device has a closed position wherein the plurality of segments has a first and second outer surface forming a ring when in the closed position.

The invention provides according to claim 9 of the invention a method of molding a green tire having a first and second bead area, the method comprising the steps of : inserting a tire clamping device inside a tire bladder and then inserting the tire clamping device and the bladder into the green tire, aligning the outer surfaces of the tire clamping device into engagement with a respective bead area of the tire and a respective upper and lower mold ring so that each bead area is clamped between the respective mold ring and the tire clamping device during cure.

In accordance with the invention, a clamping device for clamping a bead of a tire is provided. The clamping device has a closed position and an open position and comprises an inner portion and a plurality of segments connected to the inner portion. The plurality of segments each have a first and second outer surface, wherein the first outer surfaces are configured to join together to form a first ring, and the second outer surfaces are configured to join together to form a second ring when the clamping device is in its closed position.

In accordance with a preferred aspect of the invention, the segments are biased radially outward, preferably resiliently biased radially outward, of the inner portion, when the clamping device is in its open position,

In accordance with the invention, each segment has at least two radially oriented springs.

In accordance with the invention, each of the radially oriented springs is connected to the inner portion, preferably a center square block portion.

In accordance with a preferred aspect of the invention, the inner portion is resiliently adjustable in the axial direction.

In accordance with a preferred aspect of the invention, the outer diameter of the clamping device in its closed position is less than a bead diameter of a tire to be cured.

In accordance with a preferred aspect of the invention, there are a plurality of radially oriented springs for biasing each of the plurality of segments in a radially outward position.

In accordance with a preferred aspect of the invention, each radially oriented spring is connected to an axially oriented spring.

In accordance with another preferred aspect of the invention, a tire mold for curing a pneumatic tire is provided. The mold comprises a curing bladder, an upper and lower sidewall plate, an upper and lower mold ring, and a clamping device as described above.

In accordance with a preferred aspect of the invention, the mold is configured such that the mold rings and the clamping device or the mold rings, the clamping device and the sidewall plates work together to clamp a ply and/or a bead area of a green tire during its curing in the mold.

In accordance with a preferred aspect of the invention, tire mold further comprises means for pulling a vacuum allowing it to position the clamping device in its closed position.

In accordance with claim 9 of the invention, method of molding a green tire having a first and second bead area is provided. The method comprises the steps of: inserting a clamping device in accordance with at least one of the claims 1 to 5 inside a tire bladder and then inserting the clamping device and the tire bladder into the green tire; and aligning the outer surfaces of the clamping device into engagement with a respective bead area of the tire so that each tire bead area is clamped between a respective upper and a lower mold ring and the clamping device during cure.

In accordance with a preferred aspect of the invention, the method further comprises pulling a vacuum so that the clamping device is positioned into the closed position.

In accordance with a preferred aspect of the invention, the method further includes the step of inflating the tire bladder so that the segments of the clamping device are resiliently biased into an open position.

Finally, and in accordance with a preferred aspect of the invention, a method of curing a pneumatic tire in a mold is disclosed. The method comprises inserting the tire clamping device inside a tire curing bladder, then positioning the tire curing bladder with the tire clamping device inside in the mold, and then stretching the bladder and drawing a vacuum on the tire bladder for collapsing the tire clamping device into its closed position. Next, the green carcass is slipped over the closed tire clamping device and bladder. Then, the bladder is inflated and the bladder upper portions are lowered into the cavity of the green tire and the springs of the tire clamping device are released, so that the segments are biased in a radially outward direction and the bead area of the green tire carcass and the bladder is clamped between the outer portions of the tire clamping device and the respective upper and lower mold rings and, optionally, also sidewall plate portions. Next, the tire is cured when the tire clamping device is in place to ensure that the ply remains positioned between the beads during cure and not pulled out of place due to the tire shaping pressure.

### Definitions

"Axial" and "axially" means lines or directions that are parallel to the axis of rotation of the tire, in particular when the tire is in the mold and/or clamped by the clamping device.

"Circumferential" means lines or directions extending along the perimeter of the surface of the annular tread of the tire perpendicular to the axial direction.

"Equatorial Centerplane (CP)" means the plane perpendicular to the tire's axis of rotation and passing through the center of the tread.

"Lateral" means an axial direction.

"Radial" and "radially" means directions radially toward or away from the axis of rotation of the tire, in particular when the tire is in the mold and/or clamped by the clamping device.

### Brief Description of the Drawings

The invention will be described by way of example and with reference to the accompanying drawings in which:
Figure 1 illustrates a perspective view of a clamping device in the expanded position (expanded in the radial direction) of the present invention.
Figure 2 illustrates a perspective view of the clamping device of Figure 1 in the closed position (contracted in the radial direction).
Figure 3 is a top view of Figure 2.

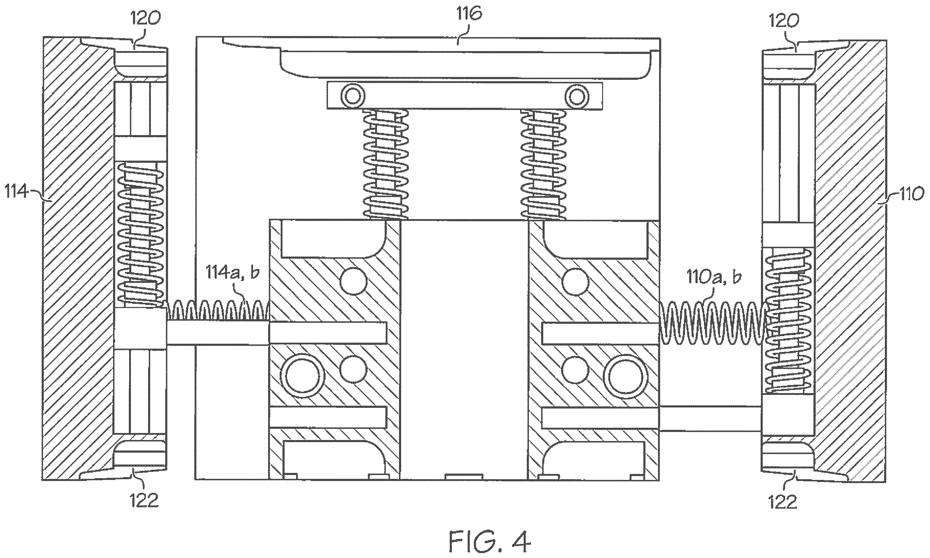

Figure 4 illustrates a side view of the clamping device of Figure 1.
Figure 5 illustrates a top view of the clamping device of Figure 1.
Figure 6 illustrates a cross-segmental view of the clamping device installed in a tire mold (shown without a tire and only the bead ends of a bladder).
Figure 7 illustrates a closeup cross-segmental view of the bead area in the tire mold.
Figure 8 illustrates a cross-segmental schematic of a tire in the tire mold with the clamping device and bladder installed.

### Detailed Description of Example Embodiments the Present Invention

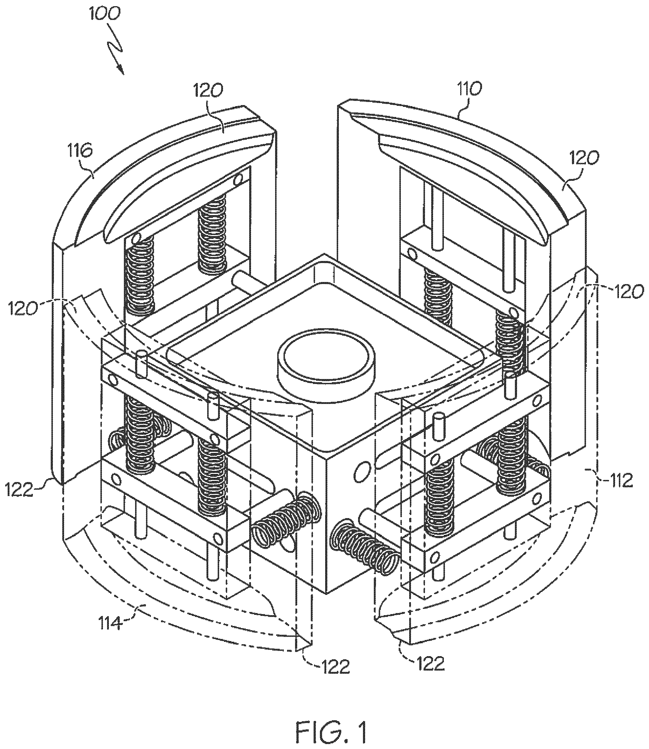

Figure 1 illustrates a perspective view of a tire clamping device 100 of the present invention, shown in the radially expanded position. The tire clamping device 100 is used to clamp the bead area of the tire in the mold to ensure the ply of the green carcass is clamped between the tire clamping device 100 and the tire mold. This allows a tire to be cured that does not have a ply turnup. Such a tire may have, for instance, a ply clamped between two bead columns. This clamping device 100 solves the problem of ply pullout during the cure when such a tire is cured without a core.

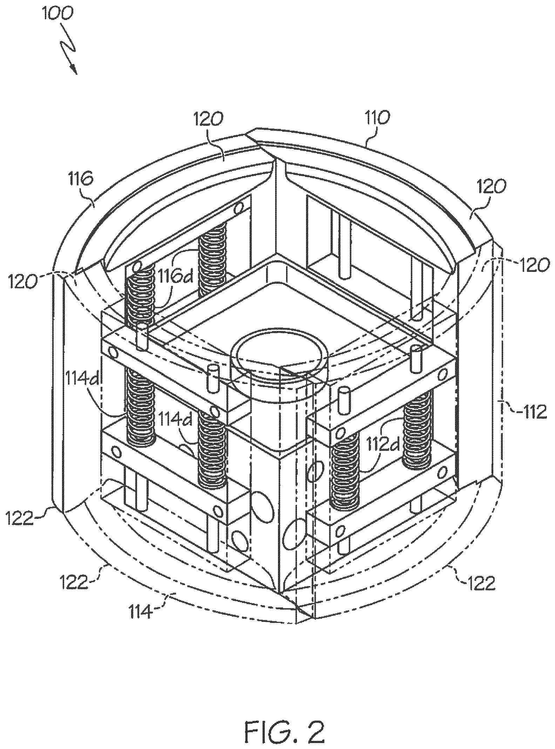

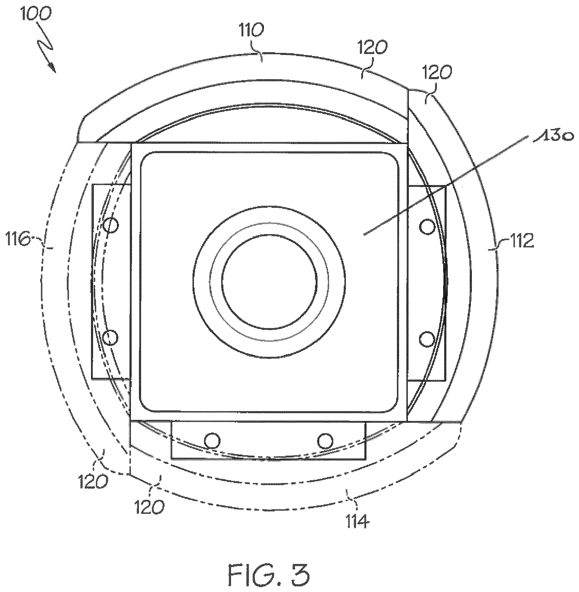

The tire clamping device 100 includes a plurality of segments 110, 112, 114 and 116. As shown in Figure 3, when the segments are in the fully closed position, the tire clamping device has a round shape. The plurality of segments when released together from the closed position, form outer portions 120, 122 that engages the tire bead and the lower radial portion of the curing bladder 130 and hold the ply in place during cure. The outer portions 120, 122 form a ring when the tire clamping device is in the closed position as shown in Figure 2.

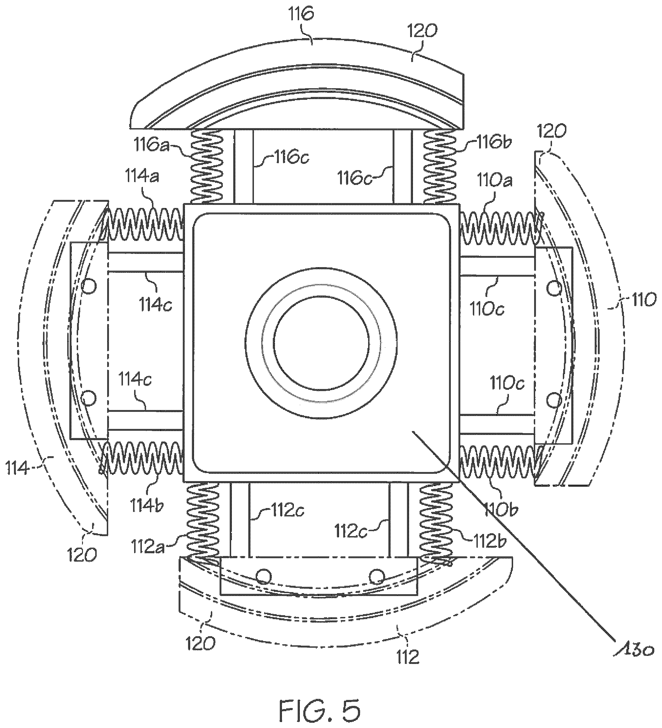

Figure 5 illustrates that the segments 110, 112, 114, and 116 each have respective radially oriented springs 116a, 116b, 110a, 110b, 112a, 112b and 114a, 114b. The radially oriented springs bias the segments 110, 112, 114, 116 in the radially expanded position. Each segment also has guide rails 110c, 112c, 114c, 116c. The radially oriented springs and the guide rails are located between the respective segments and an inner portion 130, in the example shown as a center square block 130 (although not limited to the square configuration).

Figure 2 illustrates that the segments 110, 112, 114, and 116 each have transverse or axially oriented (with respect to the tire) springs 110d, 112d, 114d, 116d that are perpendicular to the radially oriented springs. The springs may be replaced with other mechanical mechanisms known to those skilled in the art, to facilitate opening and closing the tire clamping device.

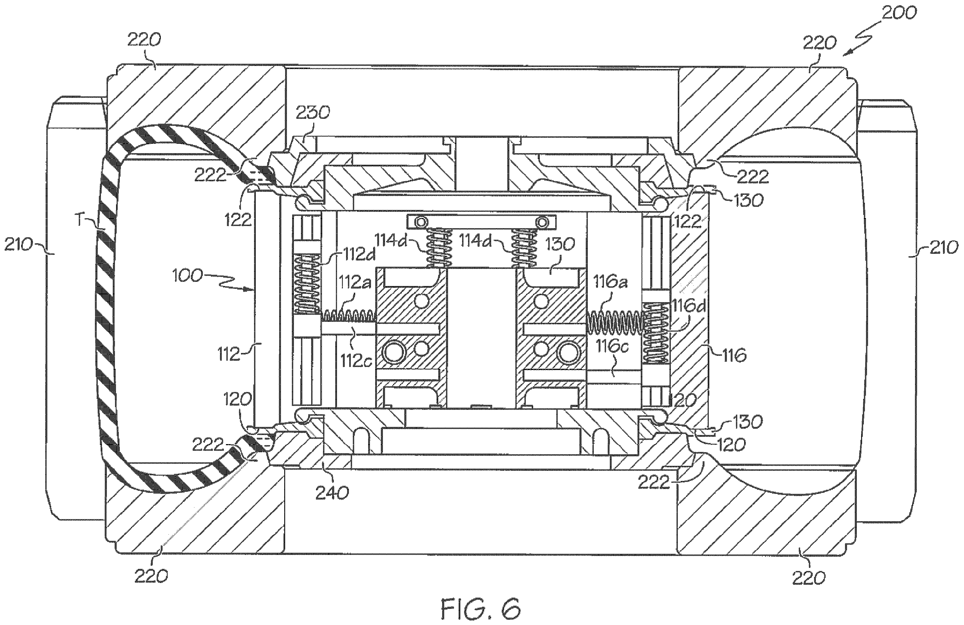

Figure 6 illustrates a typical mold 200 used for curing passenger tires. The mold 200 has tread plates 210 for molding the tread of a tire, and sidewall plates 220 for forming the sidewalls of the tire. Each sidewall plates have a lower portion 222 located in the bead area of the tire. The mold further includes upper and lower mold rings 230, 240 that are located adjacent the lower portion 222 of the sidewall plates. The mold rings and lower portions 222 of the sidewall plates work together with the tire clamping device to clamp the ply and bead area of the green tire during the cure.

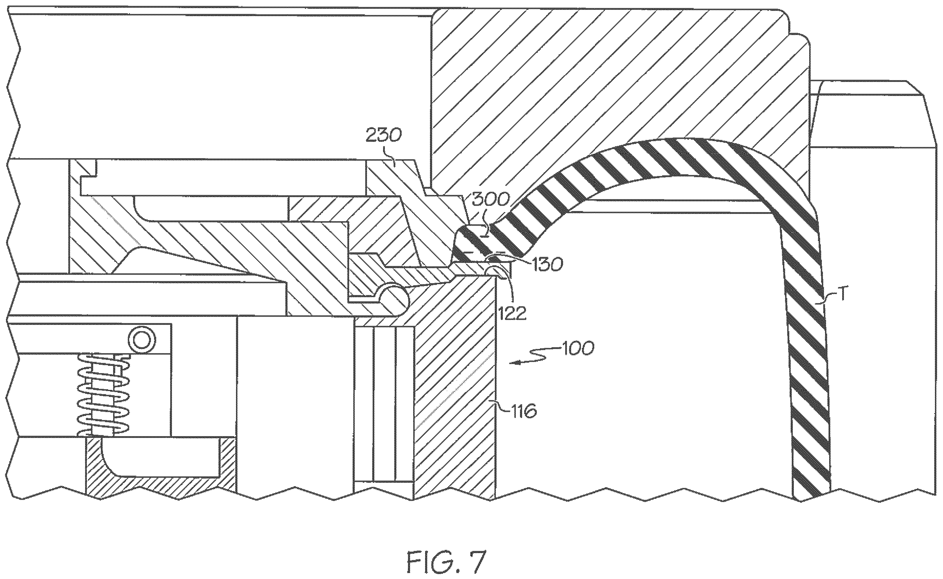

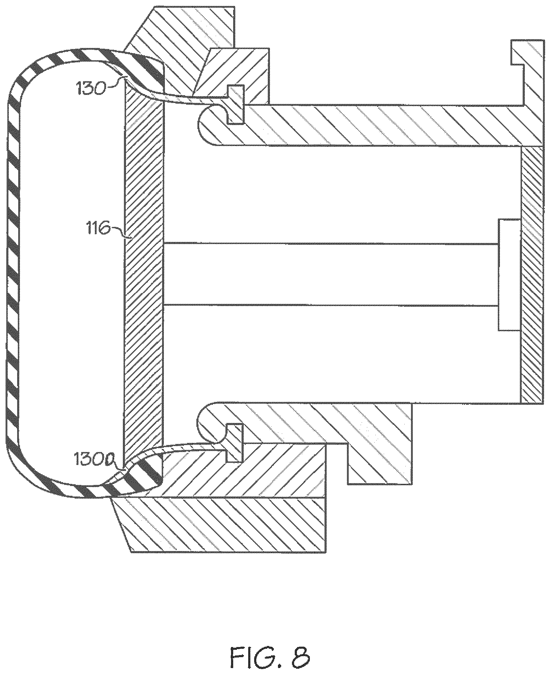

In order to cure the tire, the tire clamping device is inserted inside a curing bladder (See Fig. 8). Next, the tire curing bladder with the tire clamping device inside is positioned in the mold. The bladder is stretched and then a vacuum is drawn on the tire bladder which results in the tire clamping device being collapsed into the closed position. Next, the green carcass is slipped over the closed tire clamping device and bladder. Next, the bladder is inflated and the bladder upper portions are lowered into the cavity of the green tire and the springs of the tire clamping device are released, so that the segments are biased in a radially outward direction. The bead area 300 (see Figure 7) of the green carcass and bladder is clamped between the outer portions 122, 120 of the tire clamping device and the respective upper and lower mold rings 230, 240 and sidewall plate portions 222. Next, the tire is cured when the tire clamping device is in place to ensure that the ply remains positioned between the beads during cure and not pulled out of place due to the tire shaping pressure. Thus, the tire clamping device is sized so that when in the collapsed position, its outer diameter is less than the bead diameter, and capable of resiliently expanding so that its outer diameter in the expanded position is greater than the bead diameter of the green carcass to be cured. The vertical springs 110d, 112d, 114d, 116d allow the clamping blocks to levitate spatially and find centers between upper and lower mold ring parts and go to final position when the mold is fully closed and clamped.

## Claims

1. A clamping device for clamping a bead of a tire, the clamping device (100) having a closed position and an open position and comprising an inner portion (130) and a plurality of segments (110, 112, 114, 116) connected to the inner portion (130), wherein the plurality of segments (110, 112, 114, 116) each have a first and second outer surface, wherein the first outer surfaces are configured to join together to form a first ring, and the second outer surfaces are configured to join together to form a second ring when the clamping device (100) is in its closed position, **characterized in that** each segment (110, 112, 114, 116) has at least two radially oriented springs (110a, 110b, 112a, 112b, 114a, 114b, 116a, 116b) that are each connected to the inner portion (130) and **in that** each segment (110, 112, 114, 116) has guide rails (110c, 112c, 114c, 116c), the radially oriented springs (110a, 110b, 112a, 112b, 114a, 114b, 116a, 116b) and the guide rails (110c, 112c, 114c, 116c) being located between the respective segments (110, 112, 114, 116) and the inner portion (130).

2. The clamping device of claim 1 wherein, when the clamping device (100) is in its open position, the segments (110, 112, 114, 116) are biased radially outward, preferably resiliently biased radially outward, of the inner portion (130).

3. The clamping device of claim 1 wherein the inner portion (130) is a center square block portion.

4. The clamping device of at least one of the previous claims wherein the inner portion (130) is resiliently adjustable in the axial direction.

5. The clamping device of at least one of the previous claims wherein each radially oriented spring (110a, 110b, 112a, 112b, 114a, 114b, 116a, 116b) is connected to an axially oriented spring (110d, 112d, 114d, 116d).

6. A tire mold for curing a pneumatic tire, the mold (200) comprising a curing bladder (1300), an upper and lower sidewall plate (220), an upper and lower mold ring (230, 240), and a clamping device (100) in accordance with at least one of the previous claims.

7. The tire mold of claim 6 wherein the mold (200) is configured such that the mold rings (230, 240) and the clamping device (100) or the mold rings (230, 240), the clamping device (100) and the sidewall plates (220) work together to clamp a ply and/or a bead area of a green tire during its curing in the mold.

8. The tire mold of claim 6 or 7 further comprising means for pulling a vacuum.

9. A method of molding a green tire having a first and second bead area, the method comprising the steps of:
inserting a clamping device (100) in accordance with at least one of the claims 1 to 5 inside a tire bladder (1300) and then inserting the clamping device (100) and the tire bladder (1300) into the green tire; and
aligning the outer surfaces (120, 122) of the clamping device (100) into engagement with a respective bead area of the tire so that each tire bead area is clamped between a respective upper and a lower mold ring (230, 240) and the clamping device (100) during cure.

10. The method of claim 9, further comprising the step of pulling a vacuum so that the clamping device (100) is positioned into the closed position.

11. The method of claim 9 or 10 further including the step of inflating the tire bladder (1300) so that the segments (110, 112, 114, 116) of the clamping device (100) are resiliently biased into an open position.

## Patentansprüche

1. Klemmvorrichtung zum Klemmen einer Reifenwulst, wobei die Klemmvorrichtung (100) eine geschlossene Position und eine offene Position aufweist und umfassend einen inneren Abschnitt (130) und eine Vielzahl von Segmenten (110, 112, 114, 116), die mit dem inneren Abschnitt (130) verbunden sind, wobei die Vielzahl von Segmenten (110, 112, 114, 116) jeweils eine erste und eine zweite äußere Oberfläche aufweisen, wobei die ersten äußeren Oberflächen konfiguriert sind, um sich zusammenzufügen, um einen ersten Ring auszubilden, und die zweiten äußeren Oberflächen konfiguriert sind, um sich zusammenzufügen, um einen zweiten Ring auszubilden, wenn sich die Klemmvorrichtung (100) in seiner geschlossenen Position befindet, **dadurch gekennzeichnet, dass** jedes Segment (110, 112, 114, 116) mindestens zwei radial orientierte Federn (110a, 110b, 112a, 112b, 114a, 114b, 116a, 116b) aufweist, die jeweils mit dem inneren Abschnitt (130) verbunden sind, und **dadurch, dass** jedes Segment (110, 112, 114, 116) Führungsschienen (110c, 112c, 114c, 116c) aufweist, wobei die radial orientierten Federn (110a, 110b, 112a, 112b, 114a, 114b, 116a, 116b) und die Führungsschienen (110c, 112c, 114c, 116c) zwischen den jeweiligen Segmenten (110, 112, 114, 116) und dem inneren Abschnitt (130) gelegen sind.

2. Klemmvorrichtung nach Anspruch 1, wobei, wenn sich die Klemmvorrichtung (100) in ihrer offenen Position befindet, die Segmente (110, 112, 114, 116) von dem inneren Abschnitt (130) radial nach außen vorgespannt sind, vorzugsweise elastisch radial nach außen vorgespannt sind.

3. Klemmvorrichtung nach Anspruch 1, wobei der innere Abschnitt (130) ein mittlerer quadratischer Blockabschnitt ist.

4. Klemmvorrichtung nach mindestens einem der vorstehenden Ansprüche, wobei der innere Abschnitt (130) in der axialen Richtung elastisch anpassbar ist.

5. Klemmvorrichtung nach mindestens einem der vorstehenden Ansprüche, wobei jede radial orientierte Feder (110a, 110b, 112a, 112b, 114a, 114b, 116a, 116b) mit einer axial orientierten Feder (110d, 112d, 114d, 116d) verbunden ist.

6. Reifenform zum Vulkanisieren eines Luftreifens, die Form (200) umfassend einen Vulkanisierbalg (1300), eine obere und eine untere Seitenwandplatte (220), einen oberen und einen unteren Formring (230, 240) und eine Klemmvorrichtung (100) nach mindestens einem der vorstehenden Ansprüche.

7. Reifenform nach Anspruch 6, wobei die Form (200) derart konfiguriert ist, dass die Formringe (230, 240) und die Klemmvorrichtung (100) oder die Formringe (230, 240), die Klemmvorrichtung (100) und die Seitenwandplatten (220) zusammenarbeiten, um eine Lage und/oder einen Wulstbereich eines Reifenrohlings während seines Vulkanisierens in der Form festzuklemmen.

8. Reifenform nach Anspruch 6 oder 7, ferner umfassend Mittel zum Ziehen eines Vakuums.

9. Verfahren zum Formen eines Reifenrohlings, der einen ersten und einen zweiten Wulstbereich aufweist, das Verfahren umfassend die Schritte von:
Einsetzen einer Klemmvorrichtung (100) nach mindestens einem der Ansprüche 1 bis 5 in einen Reifenbalg (1300) und dann Einsetzen der Klemmvorrichtung (100) und des Reifenbalgs (1300) in den Reifenrohling; und
Ausrichten der äußeren Oberflächen (120, 122) der Klemmvorrichtung (100) in Eingriff mit einem jeweiligen Wulstbereich des Reifens, so dass jeder Reifenwulstbereich zwischen einem jeweiligen oberen und einem unteren Formring (230, 240) und der Klemmvorrichtung (100) während des Vulkanisierens festgeklemmt wird.

10. Verfahren nach Anspruch 9, ferner umfassend den Schritt des Ziehens eines Vakuums, so dass die Klemmvorrichtung (100) in die geschlossene Position positioniert wird.

11. Verfahren nach Anspruch 9 oder 10, ferner umfassend den Schritt eines Aufblasens des Reifenbalgs (1300), so dass die Segmente (110, 112, 114, 116) der Klemmvorrichtung (100) in eine offene Position elastisch vorgespannt werden.

## Revendications

1. Dispositif de serrage destiné au serrage d'un talon d'un bandage pneumatique, le dispositif de serrage (100) possédant une position fermée et une position ouverte et comprenant une portion interne (130) et un certain nombre de segments (110, 112, 114, 116) qui sont reliés à la portion interne (130); dans lequel lesdits plusieurs segments (110, 112, 114, 116) possèdent chacun une première et une deuxième surface externe ; dans lequel les premières surfaces externes sont configurées pour se joindre les unes aux autres dans le but d'obtenir un premier anneau et les secondes surfaces externes sont configurées pour se joindre les unes aux autres dans le but d'obtenir un deuxième anneau lorsque le dispositif de serrage (100) se trouve dans sa position fermée ; **caractérisé en ce que** chaque segment (110, 112, 114, 116) possède au moins deux ressorts qui sont orientés dans la direction radiale (110c, 110b, 112a, 112b, 114a, 114b, 116a, 116b) qui sont chacun reliés à la portion interne (130) et **en ce que** chaque segment (110, 112, 114, 116) possède des rails de guidage (110c, 112c, 114c, 116c), les ressorts qui sont orientés dans la direction radiale (110a, 110b, 112a, 112b, 114a, 114b, 116a, 116b) et les rails de guidage (110c, 112c, 114c, 116c) étant situés entre les segments respectifs (110, 112, 114, 116) et la portion interne (130).

2. Dispositif de serrage selon la revendication 1, dans lequel, lorsque le dispositif de serrage (100) se trouve dans sa position ouverte, les segments (110, 112, 114, 116) sont mis en état de précontrainte vers l'extérieur dans la direction radiale, de préférences sont mis en état de précontrainte par résilience vers l'extérieur dans la direction radiale, de la portion interne (130).

3. Dispositif de serrage selon la revendication 1, dans lequel la portion interne (130) représente une portion faisant office de pavé de gomme de forme carrée en position centrale.

4. Dispositif de serrage selon au moins une des revendications précédentes, dans lequel la portion interne (130) peut être ajustée par résilience dans la direction axiale.

5. Dispositif de serrage selon au moins une des revendications précédentes, dans lequel chaque ressort orienté dans la direction radiale (110a, 110b, 112a, 112b, 114a, 114b, 116a, 116b) est relié à un ressort (110d, 112d, 114d, 116d) qui est orienté dans la direction axiale.

6. Moule pour bandage pneumatique qui est destiné à la vulcanisation d'un bandage pneumatique, le moule (200) comprenant une vessie de vulcanisation (1300), une plaque faisant office de flanc supérieur et une plaque faisant office de flanc inférieur (220), un anneau de moulage supérieur et un anneau de moulage inférieur (230, 240), ainsi qu'un dispositif de serrage (100) en conformité avec au moins une des revendications précédentes.

7. Moule pour bandage pneumatique selon la revendication 6, dans lequel le moule (200) est configuré d'une manière telle que les anneaux de moulage (230, 240) et le dispositif de serrage (100) ou les anneaux de moulage (230, 240), le dispositif de serrage (100) et les plaques (220) faisant office de flancs (220) travaillent de concert pour serrer une nappe et/ou une zone faisant office de talon d'un bandage pneumatique à l'état non vulcanisé au cours de la vulcanisation de ce dernier dans le moule.

8. Moule pour bandage pneumatique selon la revendication 6 ou 7, qui comprend en outre un moyen qui permet de créer un vide.

9. Procédé de moulage d'un bandage pneumatique à l'état non vulcanisé qui possède une première et une deuxième zone faisant office de talons, le procédé comprenant les étapes dans lesquelles :
on insère un dispositif de serrage (100) en conformité avec au moins une des revendications précédentes 1 à 5 à l'intérieur d'une vessie pour bandage pneumatique (1300) et on insère ensuite le dispositif serrage (100) et la vessie pour bandage pneumatique 1300 dans le bandage pneumatique à l'état non vulcanisé ; et
on dispose en alignement les surfaces externes (120, 122) du dispositif de serrage (100) pour une mise en contact avec une zone respective du bandage pneumatique faisant office de talon, d'une manière telle que chaque zone du bandage pneumatique faisant office de talon est serrée entre un anneau de moulage supérieur et un anneau de moulage inférieur respectifs (230, 240) et le dispositif de serrage (100) au cours de la vulcanisation.

10. Procédé selon la revendication 9, qui comprend en outre l'étape qui consiste à appliquer un vide d'une manière telle que le dispositif de serrage (100) est placé dans la position fermée.

11. Procédé selon la revendication 9 ou 10, qui englobe en outre l'étape dans laquelle on gonfle la vessie de bandage pneumatique (1300) d'une manière telle que les segments (110, 112, 114, 116) du dispositif de serrage (100) sont mis en état de précontrainte par résilience dans la direction d'une position ouverte.
